# EUROPÄISCHE PATENTSCHRIFT

(11) **EP 1 397 222 B1**
(45) Veröffentlichungstag und Bekanntmachung des Hinweises auf die Patenterteilung: **09.03.2005**
(21) Anmeldenummer: 02743068.5
(22) Anmeldetag: 21.05.2002
(51) Int. Cl.: B22F 3/105, B23K 26/34, B29C 67/00

(54) **VERFAHREN ZUR HERSTELLUNG EINES WERKSTÜCKES MIT EXAKTER GEOMETRIE**
PROCEDURE FOR THE PRODUCTION OF A WORK PIECE WITH EXACT GEOMETRY .
PROCEDE POUR PRODUIRE UNE PIECE A GEOMETRIE EXACTE

(30) Priorität: 21.05.2001 DE 10124795
(43) Veröffentlichungstag der Anmeldung: 17.03.2004
(73) Patentinhaber: BU:ST] GMBH, 80799 München (DE)
(72) Erfinder: SIEVERS, Tim, 80636 München (DE); LOHNER, Andreas, 85640 Putzbrunn (DE)
(74) Vertreter: Jehle, Volker Armin, Dipl.-Ing.
(86) Internationale Anmeldenummer: PCT/EP2002/005574
(87) Internationale Veröffentlichungsnummer: WO 2002/094482

(56) Entgegenhaltungen:
- DE-A- 10 065 960
- DE-A- 19 533 960
- DE-C- 19 841 892

## Beschreibung

Die Erfindung richtet sich auf ein Verfahren zur Herstellung eines Werkstücks durch aufeinanderfolgendes Verfestigen von schichtweise horizontal aufgetragenem pulverförmigen Ausgangsmatetial mittels elektromagnetischer Strahlung oder Teilchenstrahlung, so daß jede aus mindestens einer Spur bestehende Schicht zwei im wesentlichen vertikale Seitenflächen und eine im wesentlichen horizontale Oberseite aufweist, die ihrerseits die Grundlage für eine etwaige nachfolgende Schicht bildet, wobei zumindest eine der beiden vertikalen Seitenwände im Anschluß an die Verfestigung des schichtweise horizontal aufgetragenen pulverförmigen Ausgangsmaterials eine mechanische Feinbearbeitung erfährt und das zu bildende Werkstück während seiner Herstellung von pulverförmigem Ausgangsmaterial umgeben ist.

Aus der DE 195 33 960 C2 ist ein Verfahren bekannt, bei dem jeweils eine Materialschicht in Form einer Spur auf einer Unterlage aufgebracht und danach mittels Laserstrahl aufgeschmolzen bzw. verfestigt wird. Danach wird eine zweite Schicht aufgebracht und verfestigt usw., wobei sich die Anzahl der aufgebrachten und jeweils mittels Lasetstrahl verfestigten Schichten nach der gewünschten Höhe des Werkstücks richtet. jeweils beim Aufbringen einer neuen Schicht verbindet sich diese mit der Oberfläche der vorher aufgebrachten Schicht. Nach der pulvermetallurgischen Herstellung des Werkstücks erfolgt eine Feinbearbeitung sowohl der Seitenflächen als auch der Oberfläche mittels spanabhebender Bearbeitung. Es wird bei dem bekannten Verfahren darauf geachtet, daß ungeschmolzenes Pulver jeweils aus dem Arbeitsbereich durch Wegblasen oder Absaugen entfernt wird.

Mit dem bekannten Verfahren können vergleichsweise kurze Hetstellzeiten für exakt dimensionierte Werkstücke erzielt werden, wenn die Strahlungsvortichtung und die mechanische Bearbeitungsvorrichtung rechnergestützt gesteuert werden. Ein Problem des bekannten Herstellungsverfahrens besteht jedoch darin, daß im Randbereich der hergestellten Werkstücke, d.h. also im Bereich der Seitenflächen ungleichförmige Materialkonsistenz entsteht, insbesondere Porositäten auftreten können.

Zur Lösung dieses Problems wird in der DE 195 33 960 C2 vorgeschlagen, Material über die gewünschte Konturgtöße hinaus aufzuschmelzen und die deutlich überstehenden Werkstückränder mittels einer nachfolgenden mechanischen Bearbeitung abzuarbeiten. Mit dieser Vorgehensweise kann zwar im Bereich der Seitenflächen soviel Material abgearbeitet werden, daß es möglich ist, eine homogene Materialbeschaffenheit der Außenkontur herzustellen, jedoch ist hierzu der Aufwand, d.h. die Bearbeitungszeit und die Werkzeugkosten unerwünscht hoch.

Aus DE-C-198 41 892 ist ein Verfahren bekannt, bei welchem ein Werkstück mittels elektromagnetischer Strahlung hergestellt wird. Im Anschluß an die Verfestigung erfolgt eine Feinbearbeitung der Seitenwände, indem das Werkstück von einem weiteren Material umgeben ist.

Aufgabe der vorliegenden Erfindung ist es deshalb, ein Verfahren bereitzustellen, das bei einer mechanischen Feinbearbeitung der Oberfläche der Außenkontur des Werkstücks den Materialaufwand wesentlich reduziert und gleichzeitig eine hohe Oberflächengüte der Außenkontur gewährleistet.

Erfindungsgemäß wird dieses Problem durch ein Verfahren zur Herstellung eines Werkstücks durch aufeinanderfolgendes Verfestigen von schichtweise horizontal aufgetragenem pulverförmigen Ausgangsmaterial mittels elektromagnetischer Strahlung oder Teilchenstrahlung gelöst, so daß jede aus mindestens einer Spur bestehende Schicht zwei im wesentlichen vertikale Seitenflächen und eine im wesentlichen horizontale Oberseite aufweist, die ihrerseits die Grundlage für eine etwaige nachfolgende Schicht bildet, wobei zumindest eine der beiden vertikalen Seitenwände im Anschluß an die Verfestigung des schichtweise horizontal aufgetragenen pulverförmigen Ausgangsmaterials eine mechanische Feinbearbeitung erfährt und das zu bildende Werkstück während seiner gesamten Herstellung von pulverförmigem Ausgangsmaterial umgeben ist, wobei die mechanische Feinbearbeitung einer vertikalen Seitenwand einer n-ten Schicht erst nach Generierung einer n + x-ten Schicht erfolgt.

Nachfolgend wird die jeweils aktuelle Schicht, d. h. diejenige Schicht, die in einem bestimmten Zeitpunkt die oberste Abschlußschicht bildet als n-te Schicht bezeichnet. Alle unter dieser n-ten Schnitt befindlichen Schichten werden als n - x-te Schichten bezeichnet sowie alle von diesem Zeitpunkt aus betrachtet in der Zukunft noch zu fertigenden Schichten als n + x-te Schichten bezeichnet.

Bei dem Verfahren der vorliegenden Erfindung wird mit der Feinbearbeitung der n-ten Schicht erst dann begonnen, wenn der geometrische Abstand von der n-ten Schicht zu einer darübezliegenden n + x-ten Schicht so groß ist, daß keine, sich als Verzug auswirkende thermische Belastung auf die n-te Schicht einwirkt

Bei der Herstellung eines Werkstücks nach dem erfindungsgemäßen Verfahren wird das pulverförmige Ausgangsmaterial in Schichtstärke auf einer Unterlage über eine Fläche, welche über die Werkstückkontur hinausreicht, aufgebracht In einem nächsten Schritt erfolgt eine spurenweise Verfestigung dieses pulverförmigen Ausgangsmaterials, wobei die Spurbreite der Wirkungsbreite der Strahlung entspricht. Zum Aufbau einer Schicht, die regelmäßig aus einer Vielzahl von Spuren, mindestens jedoch aus lediglich einer Spur besteht, werden dieses Spuren so verfestigt, daß der Randbereich einer jeden einzelnen Spur den Randbereich einer benachbarten Spur so überlappt daß beim Verfestigen der benachbarten Spuren eine homogene Schicht entsteht Beim Aufbau einer durch Spuren gebildeten Schicht können unterschiedliche Strategien der Spurenfuhrung gewählt werden.

Beispielsweise wird mit einer ersten Spur die äußerste Konturspur gebildet und anschließend der innerhalb dieser geschlossenen Konturspur gebildete Innenraum durch ein mäanderförmiges Fahrmuster ausgefüllt, so daß schließlich eine homogene Schicht entsteht Es ist aber beispielsweise auch möglich, den so entstandenen Innenraum durch ein quasispiralförmiges Fahrmuster auszufüllen.

Durch exakte Steuerung des Verfestigungsstrahles (elektromagnetischer Strahl oder TeilchenStrahl) ist es ferner möglich, die Materialeigenschaften im Bereich der Randkontur, d.h. der äußersten Konturspur des Werkstücks einzustellen. i

Mit zunehmender Strahlleistung bzw. eingebrachter Energie pro Flächeneinheit erhöht sich der Anteil an schmelzflüssiger Phase des Materials, was zu einer hohen Verdichtung des Materials und damit zu guten mechanischen Eigenschaften führt Im unmittelbaren Randbereich des Bauteils, d. h. im Bereich der seitlichen Oberfläche wird jedoch eine solche Verfestigung des pulverförmigen Materials auch zu Strukturunschärfe führen. Ein Nachteil einer hohen Strahlleistung ist die thermische Wirkung, die zu einer nachträglichen Pulveranhaftung in der n-1-ten oder in weiteren Schichten führen kann. Durch die jeweils erneute thermische Belastung der bereits gebildeten n - x-ten Schichten kann ein sog. Verzug der Werkstückkontur entstehen.

Das erfindungsgemäße Verfahren berücksichtigt diesen thermischen Einfluß der Weskstoffkontur dadurch, daß erst nach dem Fertigstellen einer gewissen Anzahl von Schichten die mechanische Feinbearbeitung erfolgt. Die Feinbearbeitung findet erfindungsgemäß nur bei den Schichten statt, die durch ihren Abstand zur aktuell hergestellten Schicht keiner, einen Verzug des Werkstücks bewirkenden, thermischen Belastung ausgesetzt sind.

Erfindungsgemäß können mehrere Schichten gleichzeitig feinbearbeitet werden. Sofern in der nachfolgenden Beschreibung lediglich auf einzelne Schichten verwiesen wird, so sind.hiervon auch Schichtpakete umfaßt, die aus einer Vielzahl von einzelnen Schichten bestehen können.

Eine Entscheidung über die Anzahl der fein zu bearbeitenden Schichten kann beispielsweise von der Konturführung abhängen. Bei Konturen mit häufigen Steigungswechseln kann das Feinbearbeiten von wenigen Schichten vorteilhafter sein als das Bearbeiten von mehren Schichten.

Anhand der beigefügten Zeichnungen wird das erfindungsgemäße Verfahren und die erfindungsgemäße Vorrichtung beispielhaft erläutert. In den Zeichnungen zeigt
- Fig. 1: eine schematische Datstellung einer Anordnung zur Dutchführung des erfindungsgemäßen Verfahrens.

In den Figuren 2 bis 9 sind einzelne Schritte des erfindungsgemäßen Verfahrens dargestellt, wobei zur besseren IIlustration des erfindungsgemäßen Verfahrens Schichtpakete gezeigt sind. Hierbei zeigt:

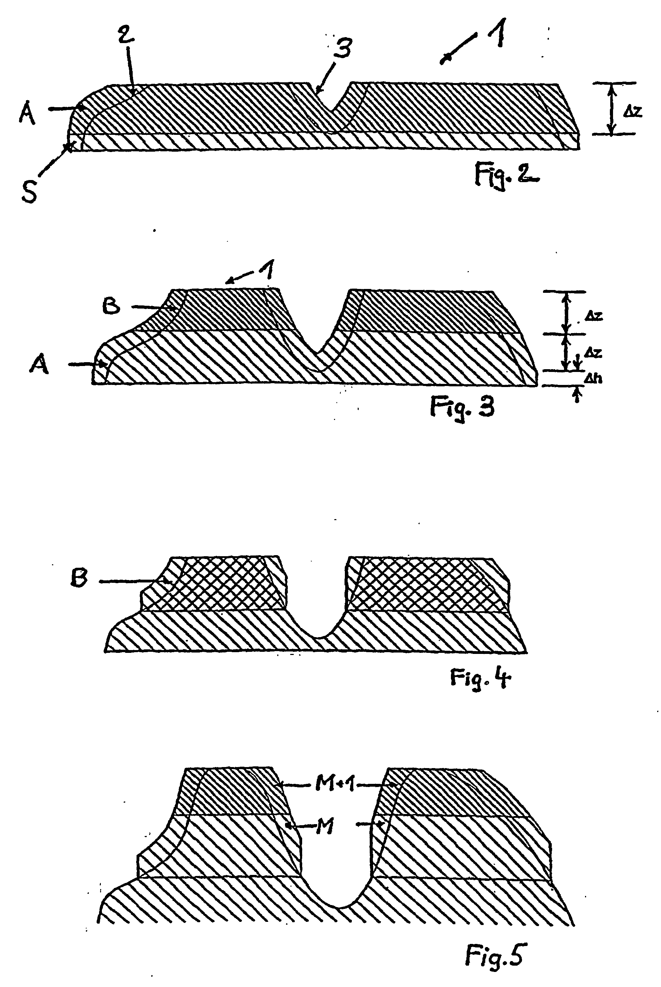

- Fig. 2: eine schematische Schnittdarstellung eines Werkstücks nach der Herstellung eines ersten Schichtpakets;
- Fig. 3: eine schematische Schnittdatstellung des Werkstücks nach Figur 2 mit einem zweiten Schichtpaket;
- Fig. 4: eine schematische Schnittdarstellung des Werkstücks nach Figur 3, wobei das erste Schichtpaket feinbearbeitet ist;

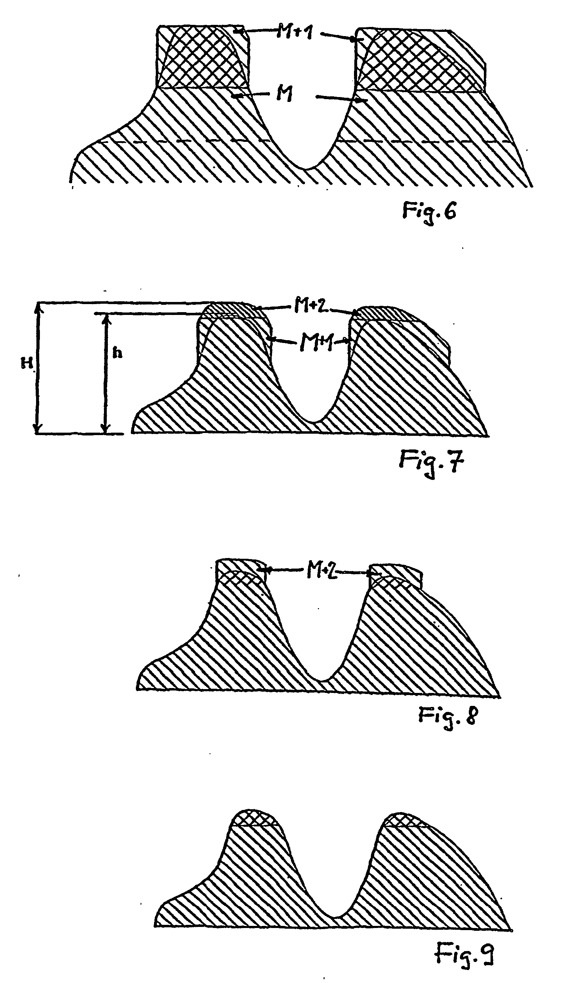

- Fig. 5: eine schematische Schnittdarstellung des Werkstücks nach Figur 4 nach Generierung eines weiteren Schichtpakets;
- Fig. 6: eine schematische Schnittdarstellung des Werkstücks nach Figur 5 nach Fertigstellung der Feinbearbeitung eines weiteren Schichtpakets;
- Fig. 7: eine schematische Schnittdarstellung des Werkstücks nach Figur 6 nach Generierung eines letzten Schichtpakets;
- Fig. 8: eine schematische Schnittdarstellung des Werkstücks nach Figur 7 nach Fertigstellung der Feinbearbeitung des vorletzten Schichtpakets;
- Fig. 9: eine schematische Schnittdarstellung des Werkstücks nach Figur 8 nach Fertigstellung der Feinbearbeitung des letzten Schichtpakets.

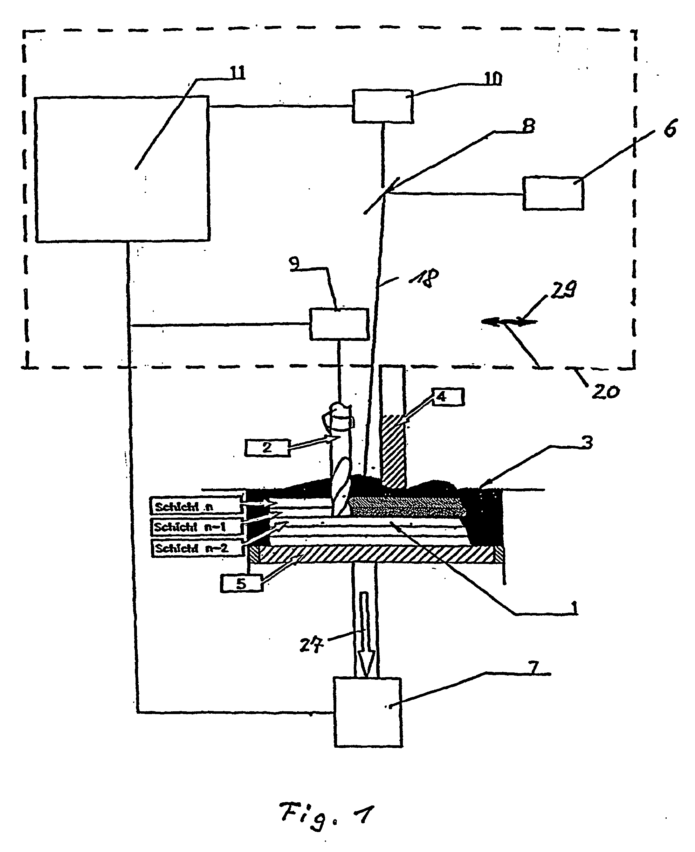

In der Anordnung nach Fig. 1 ist das herzustellende Werkstück mit 1 bezeichnet, Die Herstellung erfolgt in der Weise, daß auf einem Arbeitstisch 5, der mittels einer Hubvorrichtung 7 entsprechend der Pfeilrichtung 27 vertikal auf- und abfahrbar ist, pulverförmiges Ausgangsmaterial 3 in einer genau festgelegten Schichtstärke s aufgebracht wird. Die Ausgangsschichtstärke ist gleich der mit der Schicht n, Schicht n-1 oder Schicht n-2 in der Skizze dargestellten Schichtstärke. Die Fläche des aufgebrachten pulverförmigen Ausgangsmaterials muß dabei über die gewünschte Werkstückendkontur hinausreichen.

Oberhalb des Atbeitstisches 5 ist eine Bearbeitungseinheit 20 angeordnet, die in ihrer Gesamtheit entsprechend Pfeilrichtung 29 sowie vorzugsweise senkrecht zur Zeichenebene bewegbar ist. Die Bewegung der Bearbeitungseinheit 20 wird rechnergestützt gesteuert von einem Steuergerät 11, welches auch gleichzeitig die Hubbewegung des Arbeitstisches 5 ansteuert. Die Bearbeitungseinheit 20 umfasst im wesentlichen eine Strahlenquelle 6, einen oder mehrere von einer Betätigungseinheit 10 betätigten Spiegel oder eine vergleichbare Lenkeinrichtung für den aus der Bestrahlungsquelle 6 austretenden Strahl 18, um diesen durch Zweikoordinatenansteuerung entsprechend der gewünschten Bauteilkontur auf dem Arbeitstisch 5 zu lenken. Zusätzlich zur Bestrahlungseinrichtung 6, 8, 10 umfasst die Bearbeitungseinheit 20 noch eine Bearbeüwgsvorrichtung zur mechanischen Feinbearbeitung. Bei der in Figur 1 gezeigten Bearbeitungsvorrichtung handelt es sich um ein Fräswerkzeug 2 mit entsprechender Antriebseinheit 9, die ebenfalls von der Steuereinheit 11 angesteuert wird. Wie in Figur 1 gezeigt, taucht das Fräswerkzeug 2 zur mechanischen Feinbearbeitung in das pulverformige Ausgangsmaterial 3 ein, so daß das Werkstück 1 während seiner gesamten Herstellung und somit auch während der gesamten mechanischen Feinbearbeitung von pulverförmigem Ausgangsmaterial 3 umgeben ist. Ferner ist an der Bearbeitungseinheit 20 noch eine Abrichtleiste 4 vorgesehen, mit der pulverförmiges Ausgangsmaterial 3, das auf den Arbeitstisch 5 gebracht wurde, durch Querbewegung der Bearbeitungseinheit 20 relativ zum Arbeitstisch 5 in konstanter Schichtstärke verteilt werden kann. Die Abrichtleiste 4 kann gleichzeitig als Zufüht-Vorrichtung für das pulverförmige Ausgangsmaterial 3 ausgebildet sein.

Nach dem Aufbringen der ersten Schicht des pulverförmigen Ausgangsmaterials 3 auf den Arbeitstisch 5 wird durch entsprechende Steuerung des Strahles 18 und nach Bedarf zusätzlich durch Relativbewegung der Bearbeitungseinheit 20 zum Arbeitstisch 5 das Ausgangsmaterial in einer gewünschten Spur verfestigt Jeweils nach einer so aufgebrachten und verfestigten Schicht wird mittels der Hubvorrichtung 7 der Arbeitstisch 5 um eine Schichthöhe abgesenkt.

Im Anschluß an die Bestrahlung und Verfestigung des pulverförmigen Ausgangsmaterials zu einer ersten (n-ten) Schicht werden weitere (n + 1-te; n + 2-te; n + 3-te; ...; n + x-te) Schichten durch dieses Verfahren entsprechend einer gewünschten Kontur, die vorzugsweise in einem Datensatz hinterlegt ist, aufgetragen und verfestigt. Erst nach Generierung einer aktuellen Schicht, die von einer noch nicht fein bearbeiteten Schicht so weit beabstandet ist, daß die thermische Wirkung, die von dieser aktuellen Schicht ausgeht keinen Verzug bei dieser noch nicht bearbeiteten Schicht bewirkt bzw. bewirken könnte, wird mit der mechanischen Feinbearbeitung dieser noch nicht feinbearbeiteten Schicht begonnen.

Wenn dieses Kriterium der thermischen Nichtbeeinflussung der n - ten Schicht hinsichtlich der n - x-ten Schicht erfüllt ist, wird mit der Feinbearbeitung der n - x-ten Schicht begonnen. Wie einleitend erwähnt, gilt entsprechendes für das n-te Schichtpaket hinsichtlich der Feinbearbeitung des n - x-ten Schichtpakets.

Die Anordnung gemäß Figur 2 zeigt ein Werlstück 1 nach der Herstellung eines ersten Schichtpakets A der Höhe Δz, dargestellt in doppelter Schrafrierdichte. Das Werkstück 1 wird auf einem Sockel S aufgebaut, wobei die Höhe des Sockels S vorteilhafterweise dem Fräsoffset Δh entspricht; das Werkstück 1 soll eine Endkontur erhalten, die der Kontur 2 entspricht und innerhalb eines Konturkörpers 3 liegt. Dieser Konturkörper 3 wird durch eine bestimmte Anzahl von Schichtpaketen der Höhe Δz die ihrerseits aus einer Vielzahl von Schichten bestehen erzeugt. Die Maßdifferenz zwischen Konturkörper 3 und dem Werkstück 1 wird durch die mechanische Feinbearbeitung abgetragen, so daß nach der mechanischen Feinbeazbeitung des letzten Schichtpakets das fertige Wetkstück 1 erzeugt ist

Figur 3 zeigt den Zustand des Werkstücks 1 nach der Generierung des zweiten Schichtpakets B oberhalb des ersten Schichtpakets A, wobei das zweite Schichtpaket B ebenfalls eine Höhe von Δz aufweist. Es ist aber auch möglich, die Höhe jedes Schichtpakets zu variieren, beispielsweise abhängig von dem Konturenverlauf der Endkontur. Bei Konturen mit wesentlicher Gradientenänderung der Oberfläche könnte auch eine geringere Schichtpakethöhe vorteilhaft sein. Ebenso kann die Schichtpakethöhe von der Art des Fräsers abhängen. Grundsãtzlich gilt, daß die Schichtpakethöhe so zu wählen ist, daß mit dem ausgewählten Fräser jede gewünschte Kontur unter Einhaltung der gewünschten Oberflächengüte erzielt werden kann. Eine wesentliche technische Größe kann hierbei beispielsweise der Radius eines Kugelfräsers sein.

In Figur 4 ist der Zustand nach Fertigstellung der ersten mechanischen Feinbearbeitung an dem Schichtpaket A gezeigt Die mechanische Feinbearbeitung findet vorzugsweise mittels eines Fiugerfräsers oder Kugelfräsers statt, der die Maßdifferenz zwischen des Konturkörpets 3 und der Endkontur 2 des Werkstücks 1 entfernt. Nach Fertigstellung der Feinbearbeitung wird ein erneutes Schichtpaket erzeugt, wobei ebenfalls mit der Feinbearbeitung bis nach der Generierung mindestens des nächsten Schichtpakets gewartet wird.

In Figur 5 wird schematisch der Zustand der beiden Schichtpakete M und M + 1 gezeigt sowie in Figur 6 das nunmehr feinbeatbeitete Schichtpaket M dargestellt Wie Figur 7 zeigt, wird das letzte Schichtpaket M + 2, welches oberhalb des Schichtpakets M + 1 liegt, vorteilhafterweise so dimensioniert, daß es um einen gewissen Betrag H-h über die eigentliche Endkonturhöhe h reicht Mit der Fertigstellung der letzten Schicht des Schichtpakets M + 2 ist der schichtweise Aufbau des Werkstücks 1 abgeschlossen.

In dem nachfolgenden Arbeitsschritt, dargestellt in Figur 8, wird die mechanische Feinbearbeitung des Schichtpakets M + 1 vorgenommen, wobei durch den Konturenverlauf bedingt, ebenfalls Bereiche des überstehenden Schichtpakets M + 2 bereits mit abgetragen werden können. Der nunmehr verbliebene überstehende Rest des Schichtpakets M + 2 wird, wie in Figur 9 gezeigt, mit der letzten mechanischen Feinbearbeitang abgetragen. Mit diesem letzten Arbeitsschritt ist die Herstellung des Werkstücks 1 vollständig abgeschlossen.

## Patentansprüche

1. Verfahren zur Herstellung eines Werkstücks durch aufeinanderfolgendes Verfestigen von schichtweise horizontal aufgetragenem pulverförmigen Ausgangsmaterial (3) mittels elektromagnetischer Strahlung oder Teilchenstrahlung, so daß jede aus mindestens einer Spur bestehende Schicht zwei im wesentlichen vertikale Seitenflächen und eine im wesentlichen horizontale Oberseite aufweist, die ihrerseits die Grundlage für eine etwaige nachfolgende Schicht bildet, wobei zumindest eine der beiden vertikalen Seitenwände im Anschluß an die Verfestigung des schichtweise horizontal aufgetragenen pulverförmigen Ausgangsmaterials (3) eine mechanische Feinbearbeitung erfährt und das zu bildende Werkstück (1) während seiner Herstellung von pulverförmigem Ausgangsmaterial (3) umgeben ist, wobei die mechanische Feinbearbeitung einer vertikalen Seitenwand einer n-ten Schicht zeitverzögert, erst nach Generierung einer n + x-ten Schicht erfolgt, wobei die Zeitverzögerung der Feinbearbeitung der n + x-ten Schicht gegenüber der n-ten Schicht abhängig von den thermischen Eigenschaften des herzustellenden Werkstücks ist, so daß die thermische Wirkung, die von n+x-ten Schicht ausgeht, keinen Verzug bei der n-ten Schicht bewirkt.

2. Verfahren nach Anspruch 1, **dadurch gekennzeichnet, daß** zwischen dem Aufbau der n-ten Schicht und dem Beginn der mechanischen Feinbearbeitung dieser Schicht mindestens 1 weitere Schicht aufgebaut worden ist

3. Verfahren nach Anspruch 1 oder 2, **dadurch gekennzeichnet, daß** mehrere Schichten gleichzeitig fein bearbeitet werden.

4. Verfahren nach Anspruch 1, **dadurch gekennzeichnet, daß** mehrere Schichten zu Schichtpaketen zusammengefaßt werden.

5. Verfahren nach Anspruch 4, **dadurch gekennzeichnet, daß** nach Generierung eines n-ten Schichtpaketes mit der mechanischen Feinbearbeitung des n - 1 -ten Schichtpakets begonnen wird.

## Claims

1. A method for the production of a work piece by the successive compacting of powdered starting material (3) that has been applied horizontally in layers by means of electromagnetic radiation or particle radiation, so that each layer consisting of at least one trace comprises two substantially vertical lateral faces and one substantially horizontal upper face which, in turn, forms the basis for a possible subsequent layer, wherein at least one of the two vertical side walls is subject to mechanical finishing subsequent to the compacting of said powdered starting material (3) that has been applied horizontally in layers, and wherein the work piece (1) to be formed is surrounded by powdered starting material (3) during its production, wherein the mechanical finishing of a vertical side wall of an n^{th} layer is performed in a delayed manner after the generation of an n + x^{th} layer only, wherein the delay of the finishing of the n + x^{th} layer vis-a-vis the n^{th} layer depends on the thermal characteristics of the work piece to be formed, so that the thermal effect resulting from the n + x^{th} layer does not cause any distortion with the n^{th} layer.

2. The method according to claim 1, **characterized in that** at least one further layer has been produced between the production of the n^{th} layer and the beginning of the mechanical finishing of this layer.

3. The method according to claims 1 or 2, **characterized in that** several layers are finished simultaneously.

4. The method according to claim 1, **characterized in that** several layers are comprised to form layer packages.

5. The method according to claim 4, **characterized in that** the mechanical finishing of the n^{th} -1 layer package is started after the generation of an n^{th} layer package.

## Revendications

1. Procédé de fabrication d'une pièce à usiner par consolidation successive d'un matériau de départ (3) sous forme de poudre appliqué horizontalement par couches au moyen d'un rayonnement électromagnétique ou d'une radiation de particules, de sorte que chaque couche constituée d'au moins une trace comprenne deux surfaces latérales sensiblement verticales et une face supérieure sensiblement horizontale, qui forme pour sa part la couche de base pour une couche éventuelle postérieure, au moins une des deux parois latérales verticales expérimentant par suite de la consolidation du matériau de départ (3) sous forme de poudre appliqué horizontalement par couches une finition mécanique et la pièce à usiner (1) destinée à être formée étant entourée pendant sa fabrication du matériau de départ (3) sous forme de poudre, la finition mécanique d'une paroi latérale verticale d'une nième couche étant retardée, ne s'effectuant qu'après la génération d'une n+xième couche, le retard de finition de la n+xième couche par rapport à la nième couche dépendant des propriétés thermiques de la pièce à usiner destinée à être fabriquée, de sorte que l'action thermique, qui part de la n+xième couche, ne produise aucune déformation dans la nième couche.

2. Procédé selon la revendication 1, **caractérisé en ce qu'**au moins 1 autre couche a été constituée entre le montage de la nième couche et le début de la finition mécanique de cette couche.

3. Procédé selon la revendication 1 ou 2, **caractérisé en ce que** plusieurs couches sont finies simultanément.

4. Procédé selon la revendication 1, **caractérisé en ce que** plusieurs couches sont réunies pour former des paquets de couches.

5. Procédé selon la revendication 4, **caractérisé en ce que** la finition mécanique du n-lème paquet de couches démarre après la génération d'un nième paquet de couches.
